# DEMANDE DE BREVET EUROPEEN

(11) **EP 4 068 601 A1**
(43) Date de publication de la demande: **05.10.2022**
(21) Numéro de dépôt: 22164803.3
(22) Date de dépôt: 28.03.2022
(51) Int. Cl.: H02M 1/00, H02M 3/158, H02M 3/335

(54) **CONVERTISSEUR DE TENSION ISOLÉ**

(30) Priorité: 29.03.2021 FR 2103212
(71) Demandeur: Valeo Siemens eAutomotive France SAS, 95800 Cergy (FR)
(72) Inventeur: MOREAU, Maxime, 95800 C/o VSeA FR, Cergy (FR); DIALLO, Massourang, 95800 C/o VSeA FR, Cergy (FR); DA CUNHA ALVES, Wendell, 95800 C/o VSeA FR, Cergy (FR)
(74) Mandataire: Valeo Powertrain Systems

(57) **Abrégé**

Ce convertisseur de tension isolé (106) comporte : - des première et deuxième bornes d'entrée globales (P, N) destinées à recevoir entre elles une tension d'entrée globale (V_{E}) ; et - un premier et un deuxième modules de conversion de tension (108₁, 108₂) comportant chacun un circuit primaire et un circuit secondaire isolés reliés par un circuit magnétique, les circuits primaires recevant chacun une tension d'entrée locale (V_{E1}, V_{E2}).

Il comporte en outre un dispositif de reconfiguration (110) conçu pour sélectivement connecter les circuits primaires en parallèle l'un de l'autre entre les bornes d'entrée globales (P, N) afin que chaque tension d'entrée locale (V_{E1}, V_{E2}) soit égale à la tension d'entrée globale (V_{E}), et les connecter en série entre les bornes d'entrée globales (P, N) pour que chaque circuit primaire reçoive, comme tension d'entrée locale (V_{E1}, V_{E2}), une partie seulement de la tension d'entrée globale (V_{E}).

## Description

### Domaine technique de l'invention

La présente invention concerne un convertisseur de tension isolé.

### Arrière-plan technologique

La demande de brevet français publiée sous le numéro FR 3 064 832 A1 décrit un convertisseur de tension isolé comportant :
- des première et deuxième bornes d'entrée globales destinées à recevoir une tension d'entrée globale ; et
- un premier et un deuxième modules de conversion de tension comportant chacun un circuit primaire et un circuit secondaire isolés reliés par un circuit magnétique, le circuit primaire du premier module de conversion de tension et le circuit primaire du second module de conversion de tension recevant chacun une tension d'entrée locale.

Plus précisément, dans la demande de brevet FR 3 064 832 A1, le convertisseur de tension est un convertisseur de tension continu-continu, précédé d'un convertisseur de tension alternatif-continu destiné à être connecté à un réseau électrique alternatif monophasé ou bien triphasé. Il est prévu de laisser les deux modules en série lorsque réseau électrique est triphasé et de court-circuiter l'un des modules lorsque le réseau électrique est monophasé.

Il peut ainsi être souhaité de prévoir un convertisseur de tension qui permette d'augmenter la puissance fournie en sortie.

### Résumé de l'invention

Il est donc proposé un convertisseur de tension isolé comportant :
- des première et deuxième bornes d'entrée globales destinées à recevoir une tension d'entrée globale ; et
- un premier et un deuxième modules de conversion de tension comportant chacun un circuit primaire et un circuit secondaire isolés reliés par un circuit magnétique, le circuit primaire du premier module de conversion de tension et le circuit primaire du second module de conversion de tension recevant chacun une tension d'entrée locale ;
le convertisseur de tension isolé étant caractérisé en ce qu'il comporte en outre un dispositif de reconfiguration conçu pour sélectivement connecter les circuits primaires en parallèle l'un de l'autre entre les bornes d'entrée globales afin que chaque tension d'entrée locale soit égale à la tension d'entrée globale, et les connecter en série entre les bornes d'entrée globales pour que chaque circuit primaire reçoive, comme tension d'entrée locale, une partie seulement de la tension d'entrée globale.

Ainsi, grâce à l'invention, il est possible de toujours faire fonctionner les deux modules ensemble, de sorte que la puissance maximale du convertisseur de tension peut être atteinte, alors que lorsqu'un module est désactivé, la puissance du convertisseur de tension est limitée à celle du module restant activé.

De façon optionnelle, le dispositif de reconfiguration est conçu pour placer les circuits primaires des modules de conversion de tension en série lorsque la tension d'entrée globale est dans un premier intervalle prédéfini de tensions et en parallèle lorsque la tension d'entrée globale est dans un deuxième intervalle prédéfini de tensions, plus bas que le premier intervalle prédéfini de tensions. Ainsi, les tensions d'entrée locales sont limitées et ne prennent pas des valeurs trop importantes.

De façon optionnelle, le convertisseur de tension comporte en outre un dispositif de régulation des tensions d'entrée locales pour les maintenir dans un ratio prédéfini, par exemple pour les maintenir égales l'une à l'autre. Cela permet d'éviter qu'un déséquilibre se produise, qui conduirait à ce que la majeure partie de la conversion de tension soit réalisée par un seul des modules, ce qui peut le détériorer s'il n'est pas dimensionné pour recevoir une telle puissance électrique.

De façon optionnelle, les circuits primaires des modules de conversion de tension comportent chacun au moins un interrupteur à semi-conducteur et le dispositif de régulation est conçu pour commander les interrupteurs à semi-conducteur de manière à maintenir les tensions d'entrée locales dans le ratio prédéfini. Ainsi, la régulation des tensions d'entrée locales peut facilement être mise en œuvre.

De façon optionnelle également, le dispositif de régulation est conçu pour déterminer, à partir d'un écart entre les tension d'entrée locales, une compensation et pour commander l'un des modules de conversion de tension à partir d'une consigne électrique diminuée de la compensation et l'autre des modules de conversion de tension à partir de la même consigne augmentée de la compensation. Ainsi, il est possible de réguler les tensions d'entrée locales en même temps à partir d'une seule boucle de compensation.

De façon optionnelle également, le dispositif de régulation est conçu pour déterminer la consigne électrique à partir d'un écart entre une tension de sortie du convertisseur de tension et une consigne de tension de sortie. Ainsi, la tension de sortie est régulée en même temps que les tensions d'entrée locales.

De façon optionnelle également, la consigne électrique est une consigne de courant et la compensation est une compensation de courant. En effet, les modules comportent généralement déjà des blocs fonctionnels de régulation de courant. Par exemple, il est aussi possible de surveiller ce courant pour détecter des défauts dans le convertisseur de tension. Ainsi, il est possible de réutiliser ces blocs fonctionnels pour réguler les tensions d'entrée locales. En outre, la régulation de courant peut permettre d'améliorer les performances dynamiques du convertisseur de tension.

De façon optionnelle également, le circuit primaire de chacun des modules de conversion de tension comporte deux interrupteurs agencés en bras de commutation entre deux bornes d'entrée du module de conversion de tension considéré et le dispositif de régulation est conçu pour commander les deux bras de commutation selon une même période de commutation et selon un rapport cyclique de manière à maintenir lesdites tensions d'entrée locales dans le ratio prédéfini, et en décalant les commandes d'un des bras de commutation de 45% à 55%, de préférence 50%, de la période de commutation par rapport aux commandes de l'autre bras de commutation. Ce décalage des commandes permet d'augmenter la fréquence du bruit et de compenser les courants de perturbation.

De façon optionnelle également, les premier et deuxième modules de conversion de tension sont des modules de conversion continu-continu.

De façon optionnelle également, les circuits secondaires des premier et deuxième modules de conversion de tension sont connectés en parallèle l'un de l'autre en sortie du convertisseur de tension isolé.

### Brève description des figures

L'invention sera mieux comprise à l'aide de la description qui va suivre, donnée uniquement à titre d'exemple et faite en se référant aux dessins annexés dans lesquels :
[Fig. 1] la figure 1 est un schéma électrique d'un système électrique comportant un premier exemple de convertisseur de tension selon l'invention,
[Fig. 2] la figure 2 est un schéma électrique d'un de deux modules de conversion de tension du convertisseur de tension de la figure 1,
[Fig. 3] la figure 3 est un schéma de régulation automatique mis en œuvre par un dispositif de commande des deux modules de conversion de tension, et
[Fig. 4] la figure 4 regroupe des chronogrammes de commandes d'interrupteurs commandables des modules de conversion de tension.

### Description détaillée de l'invention

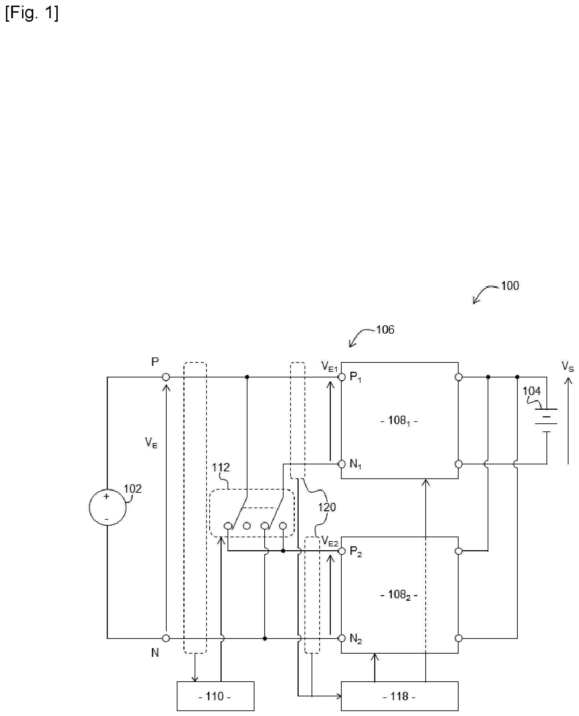

En référence à la figure 1, un système électrique 100 mettant en œuvre l'invention va à présent être décrit.

Le système électrique 100 comporte tout d'abord un réseau électrique 102 conçu pour délivrer une tension réseau V_{E}. Dans l'exemple décrit, le réseau électrique 102 est continu, de sorte que la tension réseau V_{E} est continue.

Le système électrique 100 comporte en outre une charge 104 (tel qu'un réseau basse tension) et un convertisseur de tension isolé 106 destiné à être connecté au réseau électrique 102 pour convertir la tension réseau V_{E} en une tension de sortie V_{S} d'alimentation de la charge 104. Dans l'exemple décrit, le convertisseur de tension 106 est un convertisseur continu-continu, de sorte que la tension de sortie Vs est continue. En outre, la tension réseau V_{E} est par exemple une haute tension (c'est-à-dire par exemple une tension supérieure à 60 V), tandis que la tension d'alimentation V_{S} est une basse tension (c'est-à-dire par exemple une tension inférieure à 60 V). Par exemple, la tension réseau V_{E} est comprise entre 100 V et 900 V, tandis que la tension d'alimentation V_{S} est comprise entre 10 V et 50 V, généralement égale à 14 V ou bien 48 V.

La tension réseau V_{E} reçue par le convertisseur de tension 106 peut prendre des valeurs très différentes. Cela peut venir du fait que le convertisseur de tension 106 est destiné à être successivement connecté à des réseaux électriques 102 différents et/ou du fait qu'un même réseau électrique 102 peut voir sa tension réseau V_{E} varier au cours du temps, par exemple suivant le mode de fonctionnement du réseau électrique 102. Par exemple, quand le réseau électrique 102 comporte une ou des batteries destinées à fournir une tension de 400 V, la tension réseau V_{E} peut en fait varier entre 170 V et 450 V suivant la charge de la ou des batteries. Quand le réseau électrique 102 comporte une ou des batteries destinées à fournir une tension de 800 V, la tension réseau V_{E} peut en fait varier entre 470 V et 850 V suivant la charge de la ou des batteries. C'est pourquoi le convertisseur de tension 106 est de préférence un convertisseur de tension continu, conçu pour fournir une tension de sortie V_{S} sensiblement constante sur toute une plage de tensions réseau V_{E} possibles.

Le convertisseur de tension 106 présente des première et deuxième bornes d'entrée P, N entre lesquelles le réseau électrique 102 est connecté pour délivrer sa tension réseau V_{E} entre les bornes P, N.

Le convertisseur de tension 106 comporte en outre des premier et deuxième modules 108₁, 108₂ de conversion de tension. Dans l'exemple décrit, ces modules 108₁, 108₂ sont des convertisseurs continu-continu. De préférence, les modules 108₁ et 108₂ sont sensiblement identiques. Les modules 108₁, 108₂ comportent de préférence des interrupteurs à semi-conducteur.

Les modules 108₁, 108₂ sont par exemple connectés à la charge 104 en parallèle l'un de l'autre. Ainsi, ils fournissent chacun la tension de sortie Vs.

Chaque module 108₁, 108₂ présente des première et deuxième bornes d'entrée P₁, N₁, respectivement P₂, N₂. Dans l'exemple décrit, la borne d'entrée P₁ du module 108₁ est connectée à la borne d'entrée P du convertisseur de tension 106 et la borne d'entrée N₁ du module 108₁ est connectée à la borne d'entrée P₂ du module 108₂.

Le convertisseur de tension 106 comporte en outre un dispositif 110 de reconfiguration de la connexion des modules 108₁, 108₂ au réseau électrique 102. Plus précisément, le dispositif de reconfiguration 110 est conçu pour sélectivement : (i) connecter les modules 108₁, 108₂ en série entre les bornes d'entrée P, N pour recevoir chacun, comme tension d'entrée V_{E1}, V_{E2}, une partie seulement de la tension réseau V_{E} (dans l'exemple décrit, la tension réseau V_{E} est égale à la somme des tensions d'entrée V_{E1}, V_{E2}) et (ii) connecter les modules 108₁, 108₂ en parallèle entre les deux bornes d'entrée P, N afin que leurs tensions d'entrée V_{E1},V_{E2} soient égales à la tension réseau V_{E}.

Pour passer d'une configuration de connexion à l'autre, le dispositif de reconfiguration 110 commande par exemple un commutateur 112 conçu pour sélectivement connecter les deux modules 108₁, 108₂ en série et en parallèle au réseau électrique 102. Dans la configuration parallèle, chaque tension d'entrée V_{E1}, V_{E2} est ainsi égale à la tension réseau V_{E}.

Dans l'exemple décrit, la borne P₁ du module 108₁ est connectée à la borne P et la borne N₂ du module 108₂ est connectée à la borne N. Ainsi, pour passer d'une configuration à l'autre, le commutateur 112 est conçu pour modifier la connexion des bornes N₁, P₂. Plus précisément, dans l'exemple décrit, pour la configuration en parallèle, le commutateur 112 est conçu pour connecter la borne P₂ à la borne P et la borne N₁ à la borne N. Pour la configuration en série, le commutateur 112 est conçu pour connecter ensemble les bornes N₁ et P₂.

Le dispositif de reconfiguration 110 est alors par exemple conçu pour commander le commutateur 112 pour connecter les deux modules 108₁, 108₂ en parallèle entre les deux bornes d'entrée P, N lorsque la tension réseau V_{E} appartient à l'intervalle regroupant les tensions les plus petites (l'intervalle 170 - 450 V dans l'exemple décrit) et pour connecter les modules 108₁, 108₂ en série entre les bornes d'entrée P, N lorsque la tension réseau V_{E} appartient à l'intervalle regroupant les tensions les plus élevées (l'intervalle 470 - 850 V dans l'exemple décrit).

Le convertisseur de tension 106 comporte en outre, toujours dans l'exemple décrit, un dispositif 114 de mesure de la tension réseau V_{E} et le dispositif de reconfiguration 110 est conçu pour commander le commutateur 112 en fonction de la tension réseau V_{E} mesurée. Par exemple, le dispositif de reconfiguration 110 est conçu pour déterminer dans lequel parmi deux intervalles préfinis de tension se trouve la tension d'entrée V_{E}. De préférence, ces deux intervalles prédéfinis ne se chevauchent pas. Dans l'exemple décrit, le premier intervalle correspond aux tensions réseau V_{E} possibles pour un réseau électrique de 400 V (c'est-à-dire par exemple 170 - 450 V) et le deuxième intervalle correspond aux tensions réseau V_{E} possibles pour un réseau électrique de 800 V (c'est-à-dire par exemple 470 - 850 V). Par exemple, la tension d'entrée V_{E} mesurée peut être comparée à un seuil prédéfini permettant de distinguer les deux intervalles. Dans l'exemple décrit, ce seuil pourrait être compris entre 450 V et 470 V.

Le dispositif de reconfiguration 110 est alors par exemple conçu pour commander le commutateur 112 pour connecter le module 108₁ entre les deux bornes d'entrée P, N lorsque la tension réseau V_{E} appartient à l'intervalle regroupant les tensions les plus petites (l'intervalle 170 - 450 V dans l'exemple décrit) et pour connecter les modules 108₁, 108₂ en série entre les bornes d'entrée P, N lorsque la tension réseau V_{E} appartient à l'intervalle regroupant les tensions les plus élevées (l'intervalle 470 - 850 V dans l'exemple décrit).

Dans l'exemple décrit où les modules 108₁, 108₂ comportent des interrupteurs à semi-conducteur, le convertisseur de tension 106 comporte en outre un dispositif 118 de commande de ces interrupteurs, afin par exemple de maintenir la tension de sortie V_{S} égale à une consigne V_{S}*.

Même si les modules 108₁, 108₂ sont destinés à être identiques, il existe toujours des différences entre les composants, résultant par exemple des tolérances de fabrication. Pour cette raison, lorsque les modules 108₁,108₂ sont connectés en série, il existe un risque que l'un des modules 108₁, 108₂ prenne le pas sur l'autre et réalise toute la conversion de tension. Pour éviter cela, il est proposé de chercher à maintenir les tensions d'entrée V_{E1}, V_{E2} égales.

Ainsi, le convertisseur de tension 106 comporte en outre un dispositif de régulation des tensions d'entrée V_{E1}, V_{E2} des modules 108₁, 108₂, lorsque ces derniers sont connectés en série, afin de chercher à maintenir ces tensions d'entrée V_{E1}, V_{E2} égales, notamment à une incertitude près. Par exemple, le convertisseur de tension 106 comporte des dispositifs 120 de mesure des tensions d'entrée V_{E1}, V_{E2} et le dispositif de régulation est conçu pour réguler les tensions d'entrée V_{E1}, V_{E2} à partir de leurs mesures.

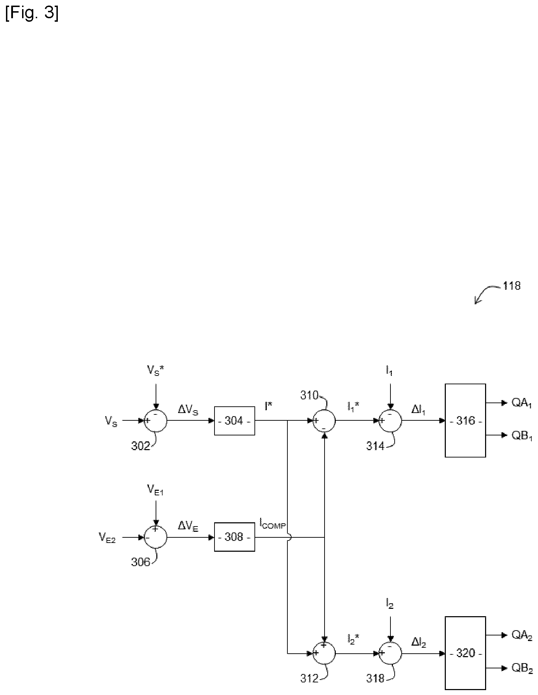

Toujours par exemple, le dispositif de régulation est conçu pour commander au moins certains des interrupteurs à semi-conducteur des modules 108₁, 108₂, à partir des tensions d'entrée V_{E1}, V_{E2} mesurées. Dans l'exemple décrit, le dispositif de régulation est mis en œuvre par le dispositif de commande 118. Un exemple de tel dispositif de commande 118 sera décrit plus en détail plus loin, en référence à la figure 3.

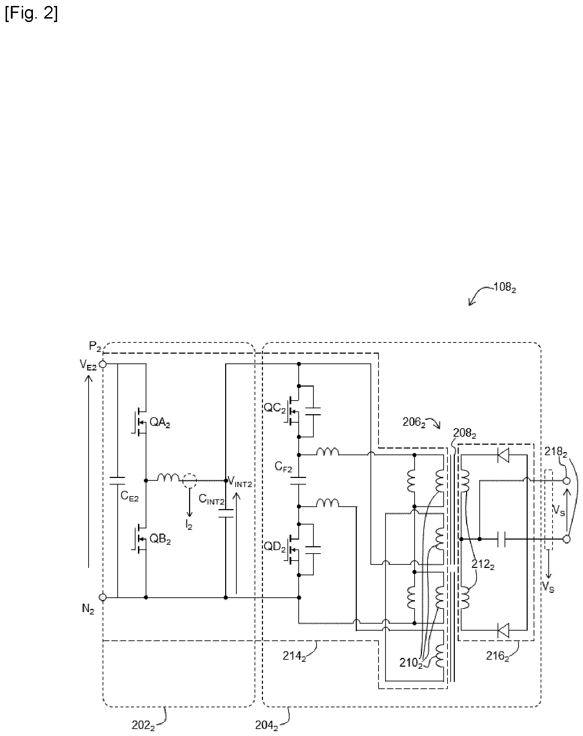

En référence à la figure 2, un exemple de réalisation du module 108₂ va à présent être décrit. Le module 108₁ est similaire et comporte des composants sensiblement identiques, qui seront désignés par la suite avec l'indice « 1 » plutôt que l'indice « 2 » utilisé pour les composants du module 108₂.

Le module 108₂ comporte tout d'abord une capacité d'entrée C_{E2} connectée entre les bornes P₂, N₂ pour lisser la tension d'entrée V_{E2}.

Le module 108₂ comporte en outre un premier convertisseur de tension 202₂ conçu pour convertir la tension d'entrée V_{E2} en une tension intermédiaire V_{INT2} continue.

Le convertisseur de tension 202₂ comporte un bras de commutation comprenant deux interrupteurs à semi-conducteur QA₂, QB₂ connectés entre les borne d'entrée P₂, N₂ et l'un à l'autre en un point milieu. Chacun des interrupteurs à semi-conducteur QA₂, QB₂ est par exemple un transistor à effet de champ à structure métal-oxyde-semiconducteur (de l'anglais « Metal Oxide Semiconductor Field Effect Transistor » ou MOSFET) ou bien un transistor bipolaire à grille isolée (de l'anglais « Insulated Gâte Bipolar Transistor » ou IGBT).

Le convertisseur de tension 202₂ comporte en outre une inductance L₂ et une capacité C_{INT2} connectées l'une à la suite de l'autre entre le point milieu du bras de commutation QA₂, QB₂ et la borne d'entrée N₂. La tension intermédiaire V_{INT2} est ainsi la tension aux bornes de la capacité C_{INT2}.

Le module 108₂ comporte en outre un deuxième convertisseur de tension 204₂ conçu pour convertir la tension intermédiaire V_{INT2} en la tension de sortie Vs.

Le convertisseur de tension 204₂ comporte en particulier une barrière d'isolation galvanique 206₂ comprenant un circuit magnétique 208₂ qui, dans l'exemple décrit, couple un ou plusieurs enroulements primaires 210₂ et un ou plusieurs enroulements secondaires 212₂ entre eux.

Dans l'exemple décrit, le convertisseur de tension 204₂ est un convertisseur dit « flyward » décrit par exemple en détail dans la demande de brevet français publiée sous le numéro FR 3 056 038 A1. Dans un convertisseur de ce type, il est prévu deux interrupteurs à semi-conducteur QC₂, QD₂ connectés l'un à l'autre par une capacité milieu C_{F2}, l'ensemble étant connecté aux bornes de la capacité intermédiaire C_{INT2} pour recevoir la tension intermédiaire V_{INT2}. Chacun des interrupteurs à semi-conducteur QC₂, QD₂ comporte par exemple un MOSFET ou bien un IGBT.

Le module de conversion de tension 1082 présente ainsi un circuit primaire 214₂ et un circuit secondaire 216₂ isolés, reliés par le circuit magnétique 208₂. Le circuit primaire 214₂ comporte en particulier les bornes P₂, N₂ pour recevoir la tension d'entrée locale V_{E2}. Dans l'exemple décrit, le circuit primaire 214₂ inclut le convertisseur de tension 202₂, les composants du convertisseur de tension 204₂ connectés entre le convertisseur de tension 202₂ et le ou les enroulements primaires 210₂, et ce ou ces enroulements primaires 210₂. De son côté, le circuit secondaire 216₂ inclut les composants du convertisseur de tension 204₂ connectés entre le ou les enroulements secondaires et des bornes de sortie 218₂ du module de conversion de tension 108₂.

En référence à la figure 3, un exemple de dispositif de commande 118 va à présent être décrit plus en détail.

Le dispositif de commande 118 comporte tout d'abord un comparateur 302 conçu pour déterminer un écart ΔV_{S} entre la tension de sortie Vs mesurée et une consigne de tension de sortie V_{S}*.

Le dispositif de commande 118 comporte en outre un régulateur 304 conçu pour déterminer une consigne électrique dite initiale à partir de l'écart ΔV_{S}. Dans l'exemple décrit, la consigne électrique initiale est une consigne de courant I*.

Le dispositif de commande 118 comporte en outre un comparateur 306 conçu pour déterminer un écart ΔV_{E} entre les tensions d'entrée V_{E1}, V_{E2}.

Le dispositif de commande 118 comporte en outre un régulateur 308 conçu pour déterminer une compensation à partir de l'écart ΔV_{E}. Dans l'exemple décrit, la compensation I_{COMP} est une compensation de courant.

Le dispositif de commande 118 comporte en outre, pour la commande de l'un des modules (le module 108₁ dans l'exemple décrit), un soustracteur 310 conçu pour diminuer la consigne I* de la compensation I_{COMP} pour fournir une consigne dite finale I₁* pour ce module 108₁. Dans l'exemple décrit, cette consigne finale I₁* est une consigne de courant pour le courant circulant dans l'inductance du module considéré (l'inductance L₁ dans l'exemple décrit).

Le dispositif de commande 118 comporte en outre, pour la commande de l'autre des modules (le module 108₂ dans l'exemple décrit), un additionneur 312 conçu pour augmenter la consigne initiale I* de la compensation I_{COMP} pour fournir une consigne dite finale I*₂ pour ce module 108₂. Dans l'exemple décrit, cette consigne finale I₂* est une consigne de courant pour le courant circulant dans l'inductance du module considéré (l'inductance L₂ dans l'exemple décrit).

Pour la commande du module 108₁, le dispositif de commande 118 comporte en outre un comparateur 314 conçu pour déterminer un écart ΔI₁ entre le courant I₁ mesuré et la consigne finale I*₁ et un dispositif 316 conçu pour déterminer des commandes pour les interrupteurs QA₁, QB₁ du module 108₁ à partir de cet écart ΔI₁.

De même, pour la commande du module 108₂, le dispositif de commande 118 comporte en outre un comparateur 318 conçu pour déterminer un écart ΔI₂ entre le courant I₂ mesuré et la consigne finale I*₂ et un dispositif 320 conçu pour déterminer des commandes pour les interrupteurs QA₂, QB₂ du module 108₂ à partir de cet écart ΔI₂.

Les commandes sont par exemple sous la forme de signaux en modulation de largeur d'impulsion (de anglais « Pulse Width Modulation » ou PWM) présentant un rapport cyclique déterminé en fonction de l'écart ΔI₁ ou ΔI₂, suivant le dispositif 316 ou 320 considéré.

Les dispositifs 316, 320 peuvent en outre être conçus pour déterminer des commandes pour les interrupteurs QC₁, QD₁, respectivement QC₂, QD₂. Ces commandes sont par exemple également des signaux PWM, mais dont le rapport cyclique est fixe (en particulier, indépendant de l'écart ΔI₁ ou ΔI₂).

Chacun des régulateur 304, 308 est par exemple l'un parmi : un régulateur PID, un régulateur PI et un régulateur non linéaire.

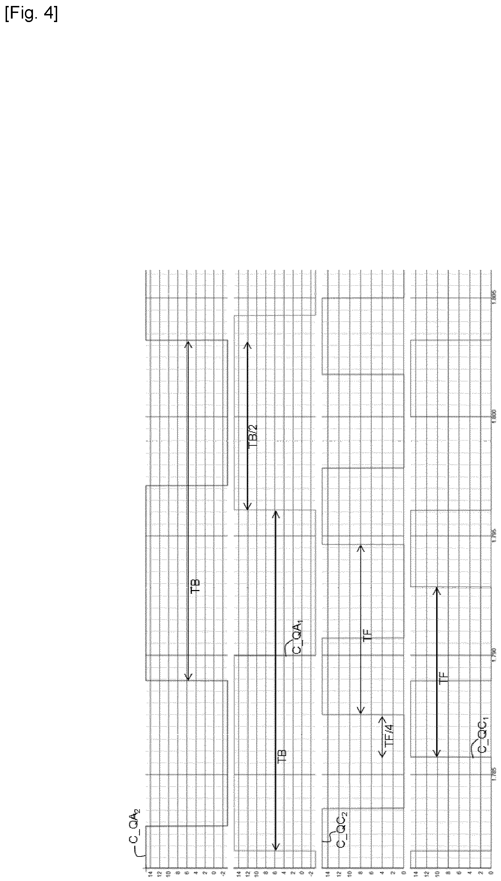

En référence à la figure 4, des chronogrammes illustrant des exemples de commandes des interrupteurs QA₁, QA₂, QC₁, QC₂ vont à présent être décrit. Sur ces chronogrammes, l'abscisse représente le temps en millisecondes et l'ordonnée la tension de commande en volts.

Les commandes des interrupteurs QB₁, QB₂, QD₁, QD₂ ne sont pas représentées car elles se déduisent des commandes des interrupteurs QA₁, QA₂, QC₁, QC₂ : les interrupteurs QB₁, QB₂ sont respectivement commandés en opposition des interrupteurs QA₁, QA₂ (avec de préférence un temps mort) et les interrupteurs QD₁, QD₂ sont respectivement commandés en opposition des interrupteurs QC₁, QC₂ (avec de préférence un temps mort).

Comme cela est visible sur le premier chronogramme, la commande C_QA₂ de l'interrupteur QA₂ alterne entre deux valeurs respectivement d'ouverture et de fermeture selon une période TB égale à l'inverse d'une fréquence de commutation FB. Dans l'exemple décrit, cette fréquence de commutation FB est fixe et prédéfinie et le dispositif de commande 118 est conçu pour déterminer un rapport cyclique de la commande C_QA₂ à partir des tensions d'entrée locales V_{E1}, V_{E2}, pour maintenir ces dernières dans le ratio prédéfini. Comme cela est illustré sur la figure 3, dans l'exemple décrit, le rapport cyclique de la commande C_QA₂ est déterminé par le dispositif 320 à partir de l'écart ΔI₂.

De même, comme cela est visible sur le deuxième chronogramme, la commande C_QA₁ de l'interrupteur QA₁ alterne entre deux valeurs respectivement d'ouverture et de fermeture selon la période TB. Dans l'exemple décrit, le dispositif de commande 118 est conçu pour déterminer un rapport cyclique de la commande C_QA₁ à partir des tensions d'entrée locales V_{E1}, V_{E2}, pour maintenir ces dernières dans le ratio prédéfini. Comme cela est illustré sur la figure 3, dans l'exemple décrit, le rapport cyclique de la commande C_QA₁ est déterminé par le dispositif 316 à partir de l'écart ΔI₁.

En outre, de préférence, les commandes d'un des bras de commutation sont décalées de 45% à 55%, de préférence 50%, de la période de commutation TB par rapport aux commandes de l'autre bras de commutation. Ceci est illustré sur la figure 4 par la double flèche TB/2.

Comme cela est visible sur les troisième et quatrième chronogrammes, les commandes C_QC₁, C_QC₂ des interrupteurs QC₁, QC₂ alternent entre deux valeurs respectivement d'ouverture et de fermeture selon une période de commutation TF. Dans l'exemple décrit, cette période de commutation TF est fixe et les commandes C_QC₁, C_QC₂ présentent des rapports cycliques égaux et fixes.

En outre, de préférence, les commandes d'une des paires d'interrupteurs (la paire QC₂, QD₂ dans l'exemple décrit) est décalée de 20% à 30%, de préférence 25%, de la période de commutation TF par rapport aux commandes de l'autre paire d'interrupteurs (la paire QC₁, QD₁ dans l'exemple décrit). Ceci est illustré sur la figure 4 par la double flèche TF/4.

Il apparaît clairement qu'un convertisseur de tension tel que ceux décrits précédemment permet de maintenir à l'équilibre le fonctionnement des modules.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

En particulier, le système de reconfiguration 110 peut en outre être configuré pour désactiver le module 108₂, plutôt que de le mettre en parallèle du module 108₁. Dans ce cas, le convertisseur de tension 106 pourrait fonctionner dans trois modes différents : avec les modules 108₁, 108₂ en série, avec les modules 108₁, 108₂ en parallèle et avec le module 1082 désactivé. En effet, les modules 108₁, 108₂ sont généralement conçus pour avoir des meilleures performances à haute puissance, par exemple entre 50% et 100 % de la puissance nominale. Ainsi, la désactivation du deuxième module 108₂ permet d'augmenter les chances que le premier module 108₁ fonctionne dans sa plage de meilleures performances. Au contraire, si les modules 108₁, 108₂ fonctionnaient en parallèle, ils risqueraient chacun de fonctionner hors de leur plage de meilleures performances. Pour désactiver le module 108₂, le système de reconfiguration 110 peut par exemple être conçu pour déconnecter sa borne d'entrée N₂ pour rendre son potentiel flottant ou bien pour court-circuiter l'entrée de ce module 108₂, par exemple en fermant les deux interrupteurs QA₂, QB₂.

Par ailleurs, le décalage d'environ 25% est valable dans le cas où le deuxième convertisseur de tension 204₁, 204₂ est de type flyward. Pour d'autres types de convertisseurs, le décalage pourrait être différent. Par exemple, il pourrait être compris entre 45% et 55%, de préférence 50%, pour un convertisseur à décalage de phase (de l'anglais « phase shift ») ou bien pour un convertisseur LLC résonant.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Convertisseur de tension isolé (106) comportant :
- des première et deuxième bornes d'entrée globales (P, N) destinées à recevoir entre elles une tension d'entrée globale (V_{E}) ; et
- un premier et un deuxième modules de conversion de tension (108₁, 108₂) comportant chacun un circuit primaire (214₂) et un circuit secondaire (216₂) isolés reliés par un circuit magnétique (208₂), le circuit primaire du premier module de conversion de tension (108₁) et le circuit primaire (214₂) du second module de conversion de tension recevant chacun une tension d'entrée locale (V_{E1}, V_{E2}) ;
le convertisseur de tension isolé étant **caractérisé en ce qu'**il comporte en outre un dispositif de reconfiguration (110) conçu pour sélectivement connecter les circuits primaires (214₂) en parallèle l'un de l'autre entre les bornes d'entrée globales (P, N) afin que chaque tension d'entrée locale (V_{E1}, V_{E2}) soit égale à la tension d'entrée globale (V_{E}), et les connecter en série entre les bornes d'entrée globales (P, N) pour que chaque circuit primaire (214₂) reçoive, comme tension d'entrée locale (V_{E1}, V_{E2}), une partie seulement de la tension d'entrée globale (V_{E}).

2. Convertisseur de tension isolé (106) selon la revendication 1, dans lequel le dispositif de reconfiguration (110) est conçu pour placer les circuits primaires (214₂) des modules de conversion de tension (108₁, 108₂) en série lorsque la tension d'entrée globale (V_{E}) est dans un premier intervalle prédéfini de tensions, et en parallèle lorsque la tension d'entrée globale (V_{E}) est dans un deuxième intervalle prédéfini de tensions, plus bas que le premier intervalle prédéfini de tensions.

3. Convertisseur de tension isolé (106) selon la revendication 1 ou 2, comportant en outre un dispositif (118) de régulation des tensions d'entrée locales (V_{E1}, V_{E2}) pour les maintenir dans un ratio prédéfini, par exemple pour les maintenir égales l'une à l'autre.

4. Convertisseur de tension isolé (106) selon la revendication 3, dans lequel les circuits primaires (214₂) des modules de conversion de tension (108₁, 108₂) comportent chacun au moins un interrupteur à semi-conducteur (Q_{A2}, Q_{B2}) et dans lequel le dispositif de régulation (118) est conçu pour commander les interrupteurs à semi-conducteur (Q_{A2}, Q_{B2}) de manière à maintenir les tensions d'entrée locales (V_{E1}, V_{E2}) dans le ratio prédéfini.

5. Convertisseur de tension isolé (106) selon la revendication 4, dans lequel le dispositif de régulation (118) est conçu pour déterminer, à partir d'un écart (ΔV_{E}) entre les tension d'entrée locales (V_{E1}, V_{E2}), une compensation (I_{COMP}) et pour commander l'un des modules de conversion de tension (108₁, 108₂) à partir d'une consigne électrique (I*) diminuée de la compensation (I_{COMP}) et l'autre des modules de conversion de tension (108₁, 108₂) à partir de la même consigne (I*) augmentée de la compensation (I_{COMP}).

6. Convertisseur de tension isolé (106) selon la revendication 5, dans lequel le dispositif de régulation (118) est conçu pour déterminer la consigne électrique (I*) à partir d'un écart (ΔV_{S}) entre une tension de sortie (V_{S}) du convertisseur de tension (106) et une consigne de tension de sortie (V_{S}*).

7. Convertisseur de tension isolé (106) selon la revendication 5 ou 6, dans lequel la consigne électrique (I*) est une consigne de courant et dans lequel la compensation (I_{COMP}) est une compensation de courant.

8. Convertisseur de tension isolé (106) selon l'une quelconque des revendications 4 à 7, dans lequel le circuit primaire (214₂) de chacun des modules de conversion de tension (108₁, 108₂) comporte deux interrupteurs (QA2, QB2) agencés en bras de commutation entre deux bornes d'entrée (P₁, N₁, P₂, N₂) du module de conversion de tension (108₁, 108₂) considéré et dans lequel le dispositif de régulation (118) est conçu pour commander les deux bras de commutation selon une même période de commutation (TB) et selon un rapport cyclique de manière à maintenir lesdites tensions d'entrée locales (V_{E1}, V_{E2}) dans le ratio prédéfini, et en décalant les commandes d'un des bras de commutation de 45% à 55%, de préférence 50%, de la période de commutation (TB) par rapport aux commandes de l'autre bras de commutation.

9. Convertisseur de tension isolé (106) selon l'une quelconque des revendications 1 à 8, dans lequel les premier et deuxième modules de conversion de tension (108₁, 108₂) sont des modules de conversion continu-continu.

10. Convertisseur de tension isolé (106) selon l'une quelconque des revendications 1 à 9, dans lequel les circuits secondaires (216₂) des premier et deuxième modules de conversion de tension (108₁, 108₂) sont connectés en parallèle l'un de l'autre en sortie du convertisseur de tension isolé.
